# EUROPEAN PATENT APPLICATION

(11) **EP 4 651 233 A1**
(43) Date of publication of application: **19.11.2025**
(21) Application number: 25170349.2
(22) Date of filing: 14.04.2025
(51) Int. Cl.: H01M 4/36, C01G 53/42, H01M 4/525, B01J 19/18, H01M 10/052

(54) **CORE-SHELL PARTICLES, POSITIVE ELECTRODE ACTIVE MATERIAL PARTICLES, METHOD OF PRODUCING THE SAME, AND NON-AQUEOUS ELECTROLYTE SECONDARY BATTERY**

(30) Priority: 15.05.2024 JP 2024079422
(71) Applicant: Prime Planet Energy & Solutions, Inc., Chuo-ku, Tokyo 103-0022 (JP)
(72) Inventor: SUGIYAMA, Junichi, Tokyo, 103-0022 (JP)
(74) Representative: Kuhnen & Wacker Patent- und Rechtsanwaltsbüro PartG mbB

(57) **Abstract**

The present disclosure relates to a method of producing particles that include first particles (20) each having a core portion (21), a gap portion (22), and an outer portion (23) and each made of a nickel-containing transition metal composite hydroxide. In the method of producing particles according to the present disclosure, a pH of the Taylor vortex reaction field at a liquid temperature of 25°C is 12.5 or less, a first crystallization is performed in which the crystallization is allowed to proceed at an oxygen concentration of the Taylor vortex reaction field of 3.5 vol% or less, a second crystallization is performed in which the oxygen concentration of the Taylor vortex reaction field is changed to a range of 5 vol% to 65 vol% and the crystallization is allowed to proceed, and a duration of the first crystallization is from 40% to 90% of a total crystallization duration.

## Description

### CROSS REFERENCE TO RELATED APPLICATIONS

This nonprovisional application is based on Japanese Patent Application No. 2024-079422 filed on May 15, 2024, with the Japan Patent Office, the entire contents of which are hereby incorporated by reference.

### BACKGROUND OF THE INVENTION

### Field of the Invention

The present disclosure relates to particles and a method of producing the same, and it also relates to positive electrode active material particles, a method of producing the same, and a non-aqueous electrolyte secondary battery.

### Description of the Background Art

Japanese Patent Laying-Open No. 2013-147416 discloses a nickel composite hydroxide usable for production of a positive electrode active material for a non-aqueous electrolyte secondary battery as well as a method of producing the same, and it also discloses that the nickel composite hydroxide has a central portion and an outer shell portion.

Japanese Patent Laying-Open No. 2016-154143 discloses transition metal composite hydroxide particles serving as a precursor of a positive electrode active material for a non-aqueous electrolyte secondary battery, as well as a method of producing the same, and it also discloses that the positive electrode active material comprises a central portion, a space portion, and an outer shell portion.

### SUMMARY OF THE INVENTION

In the production method disclosed by Japanese Patent Laying-Open No. 2013-147416, after establishing an oxidizing atmosphere in a nucleation step, then, in a particle growth step, it is necessary to change the pH, change the oxidizing atmosphere to a mixed-gas atmosphere composed of oxygen and an inert gas, and change the composition of the metal compound to supply.

In the production method disclosed by Japanese Patent Laying-Open No. 2016-154143, after establishing a non-oxidizing atmosphere in a nucleation step, then, in a particle growth step, it is necessary to change it to an oxidizing atmosphere and then change it back to a non-oxidizing atmosphere.

In both of the above-mentioned production methods, the crystallization procedure is complex, the porosity of nickel composite hydroxide particles is difficult to control, and the particle shape tends to become non-uniform, and, as a result, output properties and capacity properties of the non-aqueous electrolyte secondary battery tend not to be enhanced.

An object of the present disclosure is to provide the following: a method of producing particles each having a core portion, a gap portion outside the core portion, and an outer portion outside the gap portion and each made of a nickel-containing transition metal composite hydroxide, in which it is not necessary to change the pH and the composition of the transition-metal-containing compound in the crystallization procedure and it requires less atmosphere changes in the crystallization procedure; a method of producing positive electrode active material particles including these particles; particles each having a core portion, a gap portion outside the core portion, and an outer portion outside the gap portion, each having a circularity of 0.90 or more, and each made of a nickel-containing transition metal composite hydroxide; positive electrode active material particles each having a core portion, a gap portion outside the core portion, and an outer portion outside the gap portion, each having a circularity of 0.90 or more, and each made of a metal composite oxide containing lithium and nickel; and a non-aqueous electrolyte secondary battery comprising the same.
[1] A method of producing particles, wherein
   the particles include first particles each having a core portion, a gap portion outside the core portion, and an outer portion outside the gap portion and each made of a nickel-containing transition metal composite hydroxide,
   the method comprises a crystallization step that involves generating a Taylor vortex reaction field, and adding an aqueous solution containing a transition-metal-containing compound, an ammonium supplier, and an aqueous alkaline solution to the Taylor vortex reaction field to allow crystallization of a nickel-containing transition metal composite hydroxide to proceed, and
   in the crystallization step,
      a pH of the Taylor vortex reaction field at a liquid temperature of 25°C is 12.5 or less,
      a first crystallization is performed in which the crystallization is allowed to proceed at an oxygen concentration of the Taylor vortex reaction field of 3.5 vol% or less,
      subsequently a second crystallization is performed in which the oxygen concentration of the Taylor vortex reaction field is changed to a range of 5 vol% to 65 vol% and the crystallization is allowed to proceed, and
      a duration of the first crystallization is from 40% to 90% of a total crystallization duration.
[2] The method of producing particles according to [1], wherein in the crystallization step, the pH of the Taylor vortex reaction field at a liquid temperature of 25°C is 11.0 or more.
[3] The method of producing particles according to [1] or [2], wherein during the first crystallization, the crystallization is allowed to proceed with the oxygen concentration of the Taylor vortex reaction field maintained at 3.0 vol% or less.
[4] The method of producing particles according to any one of [1] to [3], wherein the duration of the first crystallization is from 50% to 80% of the total crystallization duration.
[5] The method of producing particles according to any one of [1] to [4], wherein during the second crystallization, the crystallization is allowed to proceed with the oxygen concentration of the Taylor vortex reaction field maintained at 10 vol% to 60 vol%.
[6] The method of producing particles according to any one of [1] to [5], wherein a rotational speed of an inner tube in which the Taylor vortex reaction field is generated is from 500 to 2000 rpm.
[7] Particles each having a core portion, a gap portion outside the core portion, and an outer portion outside the gap portion and each made of a nickel-containing transition metal composite hydroxide, wherein
   each of the particles has a circularity of 0.90 or more.
[8] The particles according to [7], wherein an average particle diameter is from 1 µm to 10 µm.
[9] The particles according to [7] or [8], wherein an average ratio (%) of a diameter of the core portion to a particle diameter is from 1% to 70%.
[10] The particles according to any one of [7] to [9], wherein an average ratio (%) of a thickness of the outer portion to a particle diameter is from 3% to 50%.
[11] The particles according to any one of [7] to [10], wherein an average ratio (%) of a width of the gap portion to a particle diameter is 10% or more.
[12] Positive electrode active material particles each having a core portion, a gap portion outside the core portion, and an outer portion outside the gap portion and each made of a metal composite oxide containing lithium and nickel, wherein
   each of the positive electrode active material particles has a circularity of 0.90 or more.
[13] The positive electrode active material particles according to [12], wherein the core portion has a solid structure or a hollow structure.
[14] The positive electrode active material particles according to [12] or [13], each further having one or more inner layers between the outer portion and the core portion.
[15] The positive electrode active material particles according to any one of [12] to [14], wherein an average particle diameter is from 2 µm to 10 µm.
[16] The positive electrode active material particles according to any one of [12] to [15], wherein an average ratio (%) of a thickness of the outer portion to a particle diameter is from 5% to 50%.
[17] The positive electrode active material particles according to any one of [12] to [16], wherein an average ratio (%) of a width of the gap portion to a particle diameter is from 5% to 80%.
[18] The positive electrode active material particles according to any one of [12] to [17], wherein a BET specific surface area is from 0.5 to 2.8 m²/g.
[19] The positive electrode active material particles according to any one of [12] to [18], wherein
   each of the positive electrode active material particles is a secondary particle consisting of primary particles, and
   an average particle diameter of the primary particles is from 0.1 to 1.0 µm.
[20] A method of producing positive electrode active material particles, the method comprising:
   a particle production step to produce particles by the method of producing particles according to any one of [1] to [6];
   a mixing step to mix the particles thus obtained and lithium together to obtain a mixture; and
   a calcination step to calcine the mixture.
[21] A non-aqueous electrolyte secondary battery comprising the positive electrode active material particles according to any one of [12] to [19].

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a schematic cross-sectional view illustrating a reaction tank in which a Taylor vortex reaction field is to be generated.
Fig. 2 is a schematic cross-sectional view illustrating a precursor particle.
Fig. 3 is a scanning electron microscopy image of an example of the overall appearance of a precursor particle.
Fig. 4 is a scanning electron microscopy image of an example of a cross section of a precursor particle.
Fig. 5 is a scanning electron microscopy image of an example of a cross section of a precursor particle.
Fig. 6 is a schematic cross-sectional view illustrating a positive electrode active material particle.
Fig. 7 is a scanning electron microscopy image of an example of the overall appearance of a positive electrode active material particle.
Fig. 8 is a scanning electron microscopy image of an example of the overall appearance of a positive electrode active material particle.
Fig. 9 is a scanning electron microscopy image of an example of a cross section of a positive electrode active material particle.

### DESCRIPTION OF THE PREFERRED EMBODIMENTS

### <Method of Producing Particles (Particle Production Method)>

In a method of producing particles (a particle production method) according to the present disclosure, the particles include first particles each having a core portion, a gap portion outside the core portion, and an outer portion outside the gap portion and each made of a transition metal composite hydroxide containing nickel (Ni) (a nickel-containing transition metal composite hydroxide; hereinafter also called a first metal hydroxide), and the method comprises a crystallization step that involves generating a Taylor vortex reaction field, and adding an aqueous solution containing a transition-metal-containing compound (hereinafter also called a raw material metal aqueous solution), an ammonium supplier, and an aqueous alkaline solution to the Taylor vortex reaction field to allow crystallization of a nickel-containing transition metal composite hydroxide to proceed. In the crystallization step, the pH of the Taylor vortex reaction field at 25°C is 12.5 or less. A first crystallization is performed in which the crystallization is allowed to proceed at an oxygen concentration of the Taylor vortex reaction field of 3.5 vol% or less. Subsequently, a second crystallization is performed in which the oxygen concentration of the Taylor vortex reaction field is changed to a range of 5 vol% to 65 vol% and the crystallization is allowed to proceed. A duration of the first crystallization is from 40% to 90% of a total crystallization duration.

### (Particles)

The particles can be, for example, a precursor of a positive electrode active material usable in an active material layer of a positive electrode of a non-aqueous electrolyte secondary battery (hereinafter also called a secondary battery) such as a lithium-ion battery. In the following, the particles are also called precursor particles. The precursor particles include first particles. The precursor particles may include particles other than the first particles. Examples of the particles other than the first particles include particles having a solid structure without a gap portion or an outer portion, particles having a hollow structure without a core portion, and the like. When the precursor particles include particles other than the first particles, the content of the first particles relative to the precursor particles can be 50% or more, for example. Preferably, the precursor particles only include the first particles. The first particles are described later.

The first metal hydroxide may be a composite hydroxide further containing manganese (Mn), and it may be a nickel-cobalt-manganese composite hydroxide further containing Mn and cobalt (Co) (hereinafter also called an NCM composite hydroxide). Preferably, the first metal hydroxide is an NCM composite hydroxide.

The NCM composite hydroxide can be, for example, a compound represented by the following formula (i):

Ni_{1-x-y-z}CoₓMn_{y}M_{z}(OH)₂ (i)

(in the formula (i),
0≤x<0.5, 0≤y<0.5, 0≤z<0.05, and

M is one or more elements selected from the group consisting of Al, Ti, Zr, B, Mg, Fe, Cu, Zn, Sn, Na, K, Ba, Sr, Ca, W, Mo, Nb, Si, V, Cr, and Ge). The composition of the first metal hydroxide can be determined by high-frequency inductively coupled plasma (ICP) emission spectroscopy, for example.

### (Crystallization Step)

The transition-metal-containing compound in the raw material metal aqueous solution can be a sulfate, a nitrate, a carbonate, or the like of transition metal, for example. The transition-metal-containing compound includes a Ni-containing compound. Examples of the Ni-containing compound include nickel sulfate (NiSO₄), nickel nitrate [Ni(NO₃)₂], nickel carbonate (NiCO₃), and the like.

When the first metal hydroxide is a composite hydroxide further containing Mn, the raw material metal aqueous solution can further include a Mn-containing compound. Examples of the Mn-containing compound include manganese sulfate (MnSO₄), manganese nitrate [Mn(NO₃)₂], manganese carbonate (MnCO₃), and the like. When the first metal hydroxide is an NCM composite hydroxide, the raw material metal aqueous solution can further include a Mn-containing compound and a Co-containing compound. The Co-containing compound may be cobalt sulfate (CoSO₄), cobalt nitrate [Co(NO₃)₂], cobalt carbonate (CoCO₃), and/or the like, for example.

The raw material metal aqueous solution may further include at least one element (hereinafter also called an additive element) selected from the group consisting of Al, Ti, Zr, B, Mg, Fe, Cu, Zn, Sn, Na, K, Ba, Sr, Ca, W, Mo, Nb, Si, V, Cr, and Ge, for example. The additive element may be added to the raw material metal aqueous solution, as the element itself or in the form of a salt (for example, in the form of a sulfate, a nitrate, or a carbonate).

The molar ratio of the transition-metal-containing compound in the raw material metal aqueous solution can be the molar ratio of the transition metal contained in the first metal hydroxide. The metal content of the raw material metal aqueous solution can be from 1.0 to 3.0 mol/L, for example.

When the raw material metal aqueous solution contains Mn, the molar ratio between Ni and Mn in the raw material metal aqueous solution may be Ni:Mn=[1-x]:[0<x<0.5], for example, and it may be [1-x]:[0.1<x<0.5] or [1-x]:[0.2<x<0.4].

When the raw material metal aqueous solution contains Mn and Co, the molar ratio between Ni, Mn, and Co in the raw material metal aqueous solution may be Ni:Mn:Co=[1-x-y]:[0<x<0.5]:[0<y<0.5], for example, and it may be [1-x-y]:[0.05<x<0.25]:[0.05<y<0.25] or [1-x-y]:[0.1<x<0.2]:[0.1<y<0.2].

When the raw material metal aqueous solution includes Mn, Co, and another element (an additive element), the molar ratio between Ni, Mn, Co, and the another element (an additive element) in the raw material metal aqueous solution may be Ni:Co:Mn:(another element (an additive element))=[1-x-y-z]:[0<x<0.5]:[0<y<0.5]:[0<z<0.05], for example, and it may be [1-x-y-z]:[0.05<x<0.25]:[0.05<y<0.25]:[0.001<z<0.01] or [1-x-y-z]:[0.1<x<0.2]:[0.1<y<0.2]:[0.001<z<0.005].

As the ammonium supplier, an aqueous ammonia solution can be used, for example. The concentration of ammonia in the aqueous ammonia solution may be from 5 to 20 wt%, for example.

As the aqueous alkaline solution, an aqueous sodium hydroxide solution can be used, for example. The concentration of sodium hydroxide in the aqueous sodium hydroxide solution may be from 10 to 40 wt%, for example.

The Taylor vortex reaction field can be a fluid in which a Taylor vortex flow is generated. A Taylor vortex flow is a row of two doughnut-shaped vortices rotating in opposite directions, and it can be generated in the following manner, for example: fluid is added to fill the space between two concentric round tubes with the difference in radius smaller than their diameters; then one of the round tubes positioned inside (hereinafter also called an inner tube) is rotated while the round tube positioned outside (hereinafter also called an outer tube) remains still; and thereby a row of two vortices are generated between the outer tube and the inner tube, in the shape of rings along the circumference. Multiple rows of two vortices can be generated in the longitudinal direction of the two concentric round tubes (the direction vertical to the diameter). Use of a fluid in which a Taylor vortex flow is generated, as a reaction field for the crystallization reaction, makes it possible to eliminate the necessity for changing the pH and the composition of the transition-metal-containing compound during the crystallization, and also makes it possible to produce the precursor particles in an easy and simple manner, thereby facilitating the commercial-scale production. It can also make it possible to save a considerable amount of time as compared to batch production, and as a result, productivity tends to be enhanced. In addition, by forming a solid-structure core portion in a non-oxidizing atmosphere and then changing the atmosphere to an oxidizing atmosphere to form an outer portion outside the core portion, it is possible to form particles each having a core portion, a gap portion, and an outer portion. Furthermore, when a Taylor vortex reaction field is used, the size of the outer portions tends to become uniform. In the production method according to the present disclosure, a commercially available reaction tank for generating a Taylor vortex flow can be used.

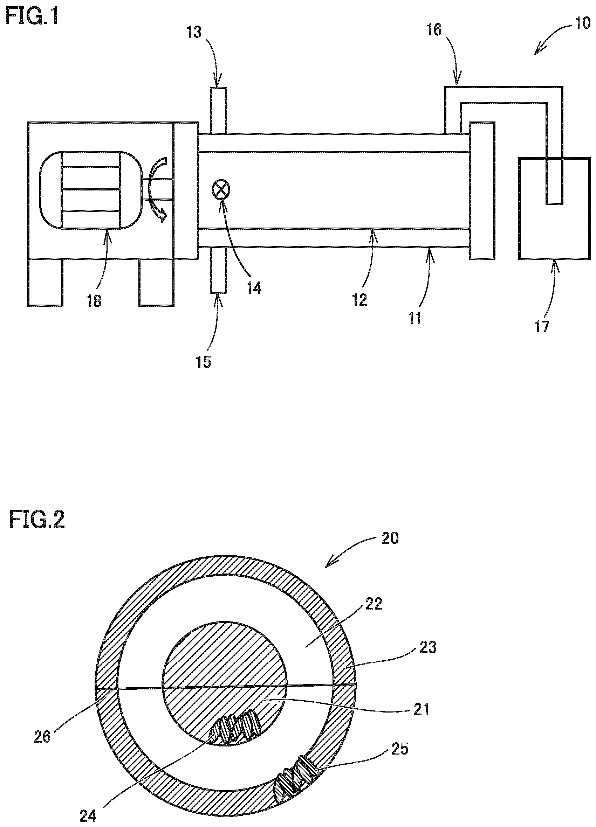

A description will be given of the reaction tank for generating a Taylor vortex reaction field, with reference to Fig. 1. A reaction tank 10 illustrated in Fig. 1 comprises an outer tube 11 and an inner tube 12. Outer tube 11 is fixed and held still. Inner tube 12 is rotatable by the action of a motor 18. Outer tube 11 comprises a first supply port 13 through which the raw material metal aqueous solution is supplied, a second supply port 14 through which the ammonium supplier is supplied, and a third supply port 15 through which the aqueous alkaline solution is supplied. Outer tube 11 further comprises a discharge port 16.

Inside the reaction tank 10, crystallization can be allowed to proceed in the following procedure, for example. Firstly, water is introduced through first supply port 13 to fill the space between outer tube 11 and inner tube 12, and inner tube 12 is rotated to generate a Taylor vortex flow between outer tube 11 and inner tube 12, thereby generating a Taylor vortex reaction field. The rotational speed of inner tube 12 can be from 500 to 2000 rpm, for example.

An aqueous sodium hydroxide solution is supplied through third supply port 15 to the fluid to regulate the pH of the Taylor vortex reaction field at a liquid temperature of 25°C to 12.5 or less. The pH at a liquid temperature of 25°C can be controlled by regulating the flow rate of the aqueous sodium hydroxide solution with a pH controller, for example. The pH of the Taylor vortex reaction field at a liquid temperature of 25°C may be 10.7 or more, for example. From the viewpoint of the circularity of the particles and also from the viewpoint of obtaining the below-described positive electrode active material particles, the pH of the Taylor vortex reaction field at a liquid temperature of 25°C is preferably from 11.0 to 12.5.

In the crystallization step, a first crystallization and a second crystallization are performed. The raw material metal aqueous solution is supplied through first supply port 13 and the ammonium supplier is supplied through second supply port 14 to start the first crystallization. The molar ratio between the raw material metal aqueous solution and the ammonium supplier supplied to the Taylor vortex reaction field is 1:1. During the first crystallization, the oxygen concentration of the Taylor vortex reaction field is maintained at 3.5 vol% or less. The oxygen concentration of the Taylor vortex reaction field may be maintained at 3.5 vol% or less by, for example, bubbling nitrogen gas into both the raw material metal aqueous solution and the ammonium supplier that are being supplied to the Taylor vortex reaction field. The oxygen concentration of the Taylor vortex reaction field during a period of time from the start of crystallization to when the oxygen concentration of the Taylor vortex reaction field is changed as described below is also called a first oxygen concentration. When the first oxygen concentration is 3.5 vol% or less, production of the first particles tends to be easier. When the first oxygen concentration exceeds 3.5 vol%, the core portion tends not to be formed. From the viewpoint of producing the first particles, the first oxygen concentration is preferably 3.0 vol% or less, more preferably 2.0 vol% or less, further preferably 1.0 vol% or less. For example, the first oxygen concentration may be 0.5 vol% or more. The oxygen concentration of the Taylor vortex reaction field can be checked with a dissolved oxygen analyzer.

The duration of the first crystallization (hereinafter also called a first crystallization duration) is set in such a manner that the ratio thereof to the total crystallization duration in the crystallization step (hereinafter also called a first crystallization ratio) falls within the range of 40% to 90%. When the first crystallization ratio falls within the above-mentioned range, production of the first particles tends to be easier. When the first crystallization ratio is less than 40%, the core portion tends not to be formed. When the first crystallization ratio exceeds 90%, the outer portion tends not to be formed. From the viewpoint of producing the first particles, the first crystallization ratio is preferably from 45% to 85%, more preferably from 50% to 80%. The first crystallization duration may be from 10 minutes to 60 minutes, for example.

Then, the oxygen concentration of the Taylor vortex reaction field is changed to a range of 5 vol% to 65 vol%, and with this range being maintained, the second crystallization is performed. In the production method according to the present disclosure, the number of times to change the oxygen concentration of the Taylor vortex reaction field in the crystallization step can be once. The oxygen concentration of the Taylor vortex reaction field can be changed by changing the type of gas to bubble into the raw material metal aqueous solution and the ammonium supplier, for example. The type of the gas to use for maintaining the oxygen concentration of the Taylor vortex reaction field at a range of 5 vol% to 65 vol% during the second crystallization may be a mixed gas of oxygen and nitrogen, and/or the like, for example. While the oxygen concentration of the Taylor vortex reaction field is being changed, supply of the raw material metal aqueous solution and the ammonium supplier can be halted; and then, after the oxygen concentration of the Taylor vortex reaction field is changed to a range of 5 vol% to 65 vol%, the supply of the raw material metal aqueous solution and the ammonium supplier can be resumed for crystallization. The period of time during which the supply of the raw material metal aqueous solution and the ammonium supplier is halted is not included in the total crystallization duration. Hereinafter, the oxygen concentration of the Taylor vortex reaction field during the second crystallization is also called a second oxygen concentration. When the second oxygen concentration falls within the above-mentioned range, production of the first particles tends to be easier. When the second oxygen concentration is less than 5 vol%, the outer portion tends not to be formed. When the second oxygen concentration exceeds 65 vol%, the circularity of the first particles tends not to be enhanced. From the viewpoint of the production and the circularity of the first particles, the second oxygen concentration is preferably from 10 vol% to 60 vol%, more preferably from 15 vol% to 55 vol%.

The duration of the second crystallization (hereinafter also called a second crystallization duration) may be set in such a manner that the ratio thereof to the total crystallization duration in the crystallization step (hereinafter also called a second crystallization ratio) falls within the range of 10% to 60%, for example. When the second crystallization ratio falls within the above-mentioned range, production of the first particles tends to be easier and the circularity tends to be enhanced. When the second crystallization ratio is less than 10%, the outer portion tends not to be formed. When the second crystallization ratio exceeds 60%, the circularity tends not to be enhanced. From the viewpoint of the production and the circularity of the first particles, the second crystallization ratio is preferably from 15% to 55%, more preferably from 20% to 50%. The second crystallization duration may be from 3 minutes to 30 minutes, for example.

During the crystallization, the pH of the Taylor vortex reaction field at a liquid temperature of 25°C is only required to be maintained at the pH adjusted before the start of crystallization, and during the first crystallization and the second crystallization, no change is required to the pH of the Taylor vortex reaction field at a liquid temperature of 25°C. As a result, production of the first particles tends to be easier. The pH of the Taylor vortex reaction field at a liquid temperature of 25°C during the crystallization is maintained at 12.5 or less, preferably at a range of 11.0 to 12.5.

In the production method according to the present disclosure, the number of times to change the oxygen concentration in the crystallization step can be twice. For example, the second crystallization may be performed by changing the oxygen concentration of the Taylor vortex reaction field to a range of 5 vol% to 65 vol% and allowing crystallization to proceed at this oxygen concentration (hereinafter also called a second crystallization A), and then changing the oxygen concentration of the Taylor vortex reaction field to 3.5 vol% or less and allowing crystallization to proceed at this oxygen concentration (hereinafter also called a second crystallization B). The second crystallization A and the second crystallization B can be allowed to proceed in such a manner that the total duration remains within the above-mentioned second crystallization duration.

After the completion of the crystallization step, the solution containing the precursor particles can be discharged through discharge port 16 and collected in a vessel 17. The collected solution containing the precursor particles can be filtrated, rinsed with water, and then dried, and thereby the precursor particles can be obtained.

### <First Particles>

Each of the first particles is a particle that has a core portion, a gap portion outside the core portion, and an outer portion outside the gap portion, and that is made of the first metal hydroxide. The first particles can be produced by the above-described particle production method. The average particle diameter of the first particles may be from 1 µm to 10 µm, for example. Herein, the average particle diameter is a particle diameter D50 in volume-based particle diameter distribution at which cumulative frequency of particle diameters accumulated from the small diameter side reaches 50%. The volume-based particle diameter distribution can be measured with a particle diameter distribution measurement apparatus.

The circularity of the first particles may be, for example, 0.70 or more, preferably 0.80 or more, more preferably 0.90 or more, further preferably 0.95 or more, and it may be 1.00 or less, for example. Herein, the circularity is calculated by the following equation.

Circularity=(Perimeter of a circle the area of which is equal to the projected area of the particle)/(Perimeter of the particle)

The circularity of the first particles is the average of fifty first particles. When the circularity of the first particles is 0.90 or more, packing properties of the positive electrode active material particles tend to be enhanced and capacity properties of the secondary battery tend to be enhanced.

A description will be given of the first particle, with reference to Fig. 2. Fig. 2 is a schematic cross-sectional view illustrating a first particle 20. First particle 20 has a core portion 21, a gap portion 22, and an outer portion 23. First particle 20 may be a secondary particle consisting of primary particles aggregated together. Core portion 21 may be made of primary particles 24 aggregated together. Core portion 21 may have a solid structure, or may have a hollow structure. When core portion 21 has a hollow structure, the hollow of core portion 21 is not regarded as gap portion 22.

Outer portion 23 may be made of primary particles 25 aggregated together. Gap portion 22 can be the space between core portion 21 and outer portion 23; core portion 21 and outer portion 23 may be completely separated from each other by gap portion 22, or, alternatively, at a part of first particle 20, primary particle 24 and primary particle 25 may be in contact with each other and thereby core portion 21 and outer portion 23 may be in contact with each other.

The ratio of gap portion 22 to the total volume of first particle 20 may be, for example, 10% or more, or 40% or more, or 60% or more, and it may be 30% or less, or 60% or less, or 80% or less. Herein, the ratio of gap portion 22 to the total volume of first particle 20 is a value that is determined by performing image processing of a cross-sectional SEM image of first particle 20, discriminating gap portion 22 from the portion where primary particles 24 are present, and calculating the ratio of the total area of the gap portion to the area of the particle.

Fig. 2 illustrates only some of primary particles 24 and 25. First particle 20 may further have one or more outer layers outside the outer portion 23. Outer portion 23 may be formed in such a manner to either completely or partly cover the core portion 21.

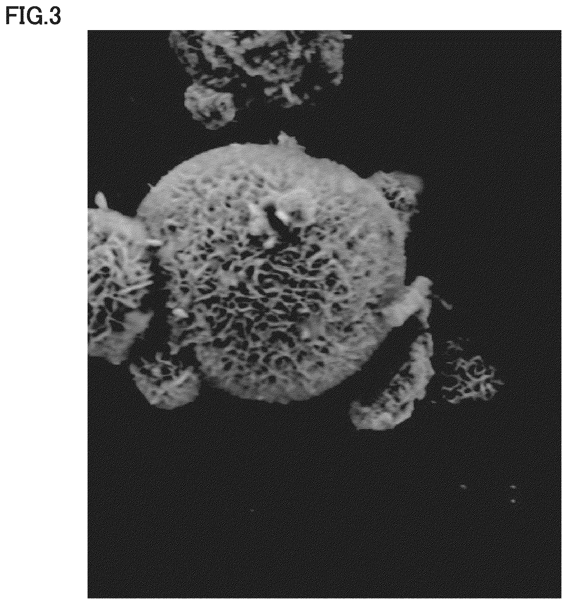

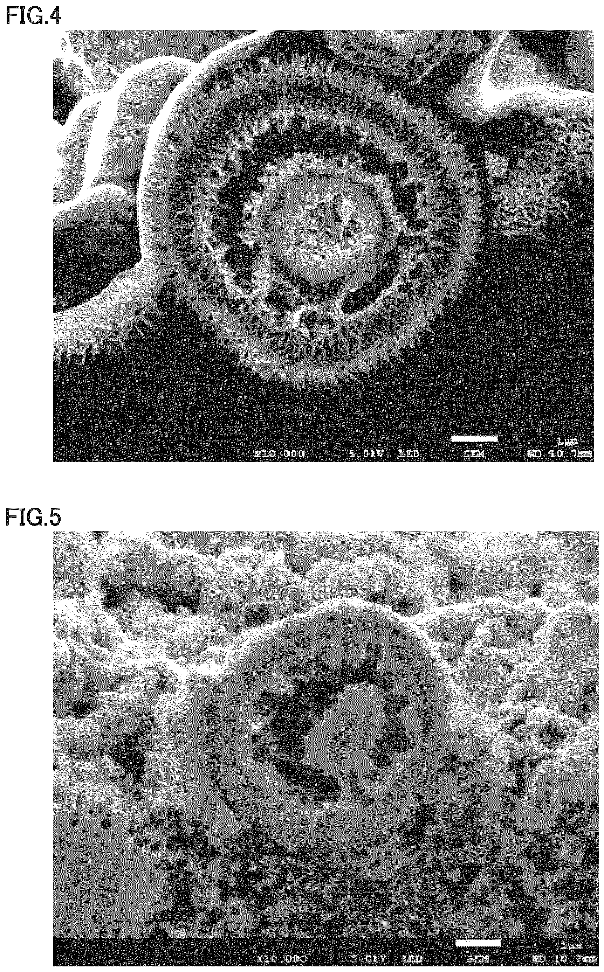

Fig. 3 is a scanning electron microscope (hereinafter also called an SEM) image of an example of the overall appearance of a first particle. Each of Fig. 4 and Fig. 5 is an SEM image of an example of a cross section of a first particle. In Fig. 4, the core portion of the first particle has a hollow structure. In Fig. 5, the core portion of the first particle has a solid structure.

The average ratio (%) of the diameter of core portion 21 to the particle diameter of first particle 20 (hereinafter also called a first ratio) can be from 1% to 70%. The particle diameter of first particle 20 can be the diameter of a hypothetical circle when first particle 20 in a cross section of first particle 20 is regarded as a circle. For example, in Fig. 2, the particle diameter of first particle 20 is shown as a straight line 26. The diameter of core portion 21 can be a part of the above-mentioned diameter (straight line 26) overlapping the core portion 21.

The average ratio (%) of the thickness of outer portion 23 to the particle diameter of first particle 20 (hereinafter also called a second ratio) can be from 3% to 50%. The thickness of outer portion 23 can be a part of the above-mentioned diameter of first particle 20 (straight line 26) overlapping the outer portion 23.

The average ratio (%) of the width (thickness) of gap portion 22 to the particle diameter (diameter) of first particle 20 (hereinafter also called a third ratio) can be 10% or more, or 40% or more, or 60% or more, for example. The third ratio may be 30% or less, or 60% or less, or 80% or less, for example. The width (thickness) of gap portion 22 can be a part of the above-mentioned diameter of first particle 20 (straight line 26) overlapping the gap portion 22. Each of the first ratio, the second ratio, and the third ratio is the average of fifty first particles. The first ratio, the second ratio, and the third ratio are measured by a method described below in the Examples section.

First particle 20 has high packing properties and a relatively uniform gap portion in a cross section, so when used as a positive electrode active material particle, the output properties and the capacity properties tend to be enhanced.

The average particle diameter of primary particles 24 and 25 may be not less than 0.01 and less than 0.5 µm, for example. Herein, the primary particle refers to a particle whose grain boundary is not visually identified in an SEM image of the particle, and this particle has a first largest diameter of 0.01 µm or more. The first largest diameter refers to the distance between two points located farthest apart from each other on the outline of the particle. In the present embodiment, "the outline of a particle" may be identified in a two-dimensional projected image of the particle, or may be identified in a cross-sectional image of the particle. For example, the outline of a particle may be identified in an SEM image of powder, or may be identified in a cross-sectional SEM image of the particle. The average value of the first largest diameters is calculated from the first largest diameters of a hundred particles. These hundred particles are selected randomly.

### <Positive Electrode Active Material Particles>

Positive electrode active material particles according to the present disclosure include a calcined product of a mixture of the above-described first particles and lithium (Li). The average particle diameter of the positive electrode active material particles may be from 1 µm to 10 µm, for example. The circularity of the positive electrode active material particles is 0.90 or more, preferably 0.95 or more, and it may be, for example, 1.00 or less. The circularity of the positive electrode active material particles is the average of fifty positive electrode active material particles. When the circularity of the positive electrode active material particles is 0.90 or more, packing properties tend to be enhanced and capacity properties of the secondary battery tend to be enhanced.

The positive electrode active material particle may be a particle made of a composite oxide containing Li and Ni, and may be a particle made of a composite oxide containing Li, Ni, and Mn, and may be a particle made of a composite oxide containing Li, Ni, Co, and Mn.

The positive electrode active material particle may be a particle made of a layered metal oxide represented by, for example, the following formula (ii):

Li₁₊ₐ₁Ni_{1-x-y-z}CoₓMn_{y}M_{z}O₂ (ii)

(in the formula (ii),
-0.1≤a1<0.3, 0≤x<0.5, 0≤y<0.5, 0≤z<0.05, and
M is one or more elements selected from the group consisting of Al, Ti, Zr, B, Mg, Fe, Cu, Zn, Sn, Na, K, Ba, Sr, Ca, W, Mo, Nb, Si, V, Cr, and Ge).

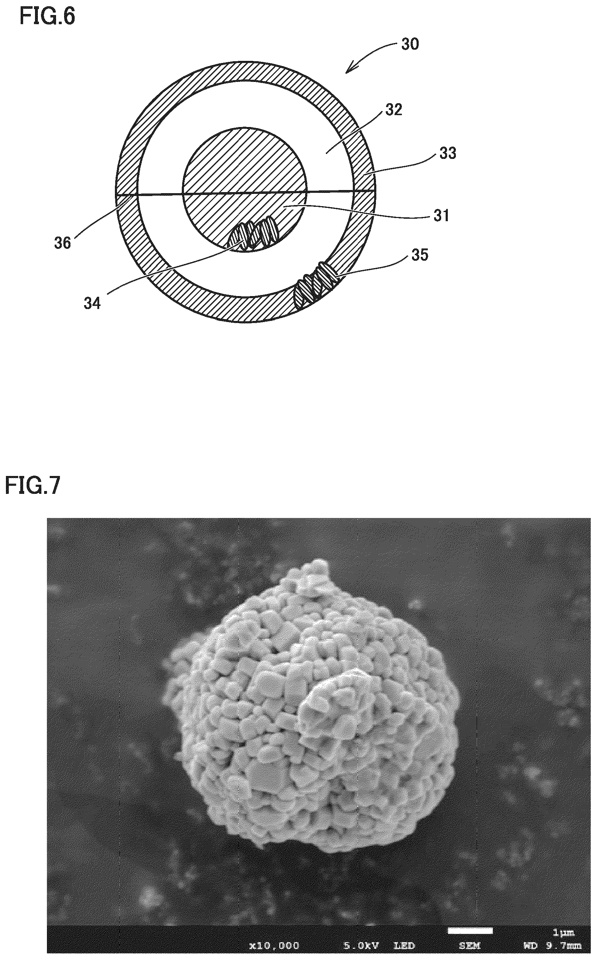

A description will be given of the positive electrode active material particle, with reference to Fig. 6. Fig. 6 is a schematic cross-sectional view illustrating a positive electrode active material particle 30. Positive electrode active material particle 30 has a core portion 31, a gap portion 32, and an outer portion 33. Positive electrode active material particle 30 may be a secondary particle consisting of primary particles aggregated together.

Core portion 31 may be made of primary particles 34 aggregated together. Core portion 31 may have a solid structure, or may have a hollow structure. When core portion 31 has a hollow structure, the hollow of core portion is not regarded as gap portion 32. Outer portion 33 may be made of primary particles 35 aggregated together. Gap portion 32 can be the space between core portion 31 and outer portion 33; core portion 31 and outer portion 33 may be completely separated from each other by gap portion 32, or, alternatively, at a part of positive electrode active material particle 30, primary particle 34 and primary particle 35 may be in contact with each other and thereby core portion 31 and outer portion 33 may be in contact with each other.

The ratio of gap portion 32 to the total volume of positive electrode active material particle 30 may be, for example, 10% or more, or 40% or more, or 60% or more, and it may be 30% or less, or 60% or less, or 80% or less. Herein, the ratio of gap portion 32 to the total volume of positive electrode active material particle 30 is a value that is determined by performing image processing of a cross-sectional SEM image of positive electrode active material particle 30, discriminating gap portion 32 from the portion where primary particles 34 are present, and calculating the ratio of the total area of gap portion 32 to the area of positive electrode active material particle 30.

Fig. 6 illustrates only some of primary particles 34 and primary particles 35. Positive electrode active material particle 30 may further have one or more additional outer portions outside the outer portion 33. Outer portion 33 may be formed in such a manner to either completely or partly cover the core portion 31.

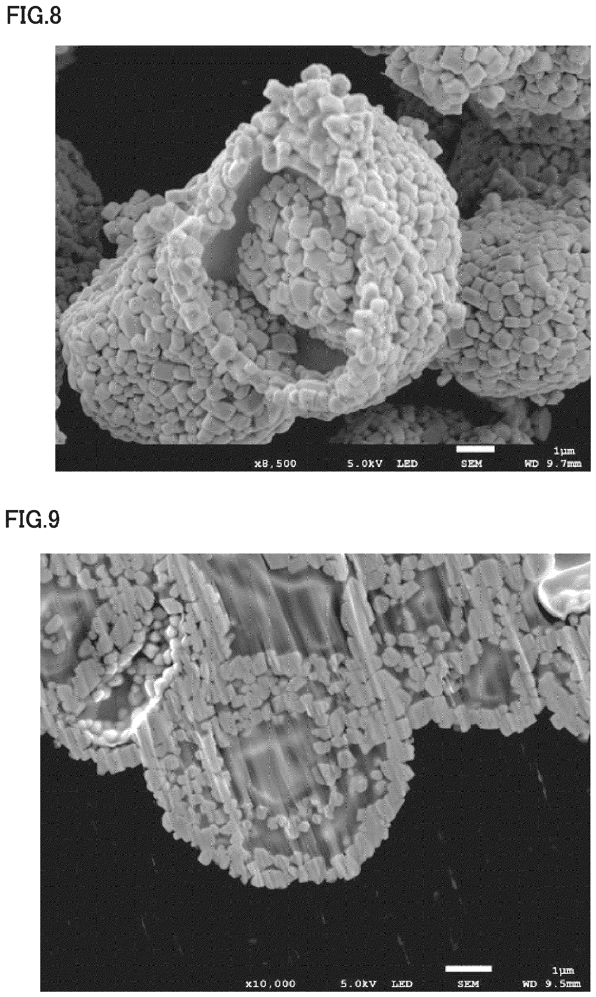

Fig. 7 is an SEM image of an example of the overall appearance of a positive electrode active material particle. As illustrated in Fig. 8, the outer portion may be formed in such a manner to partly cover the core portion. Fig. 9 is an SEM image of an example of a cross section of a positive electrode active material particle.

The average ratio (%) of the thickness of outer portion 33 to the particle diameter of positive electrode active material particle 30 (hereinafter also called a fourth ratio) can be from 3% to 50%. The particle diameter of positive electrode active material particle 30 can be the diameter of a hypothetical circle when positive electrode active material particle 30 in a cross section of positive electrode active material particle 30 is regarded as a circle. For example, in Fig. 3, the particle diameter of positive electrode active material particle 30 is shown as a straight line 36. The thickness of outer portion 33 can be a part of the above-mentioned diameter of positive electrode active material particle 30 (straight line 36) overlapping the outer portion 33.

The average ratio (%) of the width (thickness) of gap portion 32 to the particle diameter (diameter) of positive electrode active material particle 30 (hereinafter also called a fifth ratio) may be, for example, 10% or more, or 40% or more, or 60% or more, and it may be 30% or less, or 60% or less, or 80% or less. It can be from 5% to 80%. The width (thickness) of gap portion 32 can be a part of the above-mentioned diameter of positive electrode active material particle 30 (straight line 36) overlapping the gap portion 32. Each of the fourth ratio and the fifth ratio is the average of fifty positive electrode active material particles 30. The fourth ratio and the fifth ratio are measured by a method described below in the Examples section.

The BET specific surface area of positive electrode active material particle 30 may be from 0.5 to 2.8 m²/g, for example.

The average particle diameter of primary particles 34 and 35 may be from 0.1 to 1.0 µm, for example.

Positive electrode active material particle 30 has high packing properties and a relatively uniform gap portion in a cross section, so when used as a positive electrode active material particle, the output properties and the capacity properties tend to be enhanced.

### <Method of Producing Positive Electrode Active Material Particles>

The method of producing the positive electrode active material particles includes a particle production step to produce particles by the above-described precursor particle production method (the above-described method of producing precursor particles), a mixing step to mix the particles thus obtained and lithium (Li) together to obtain a mixture, and a calcination step to calcine the mixture.

In the mixing step, the precursor particles and Li can be mixed so that, for example, the ratio of the total number of moles of Li to the total number of moles of metallic elements except Li in the positive electrode active material particles (the Li/Me ratio) falls within the range of 1.0 to 1.3, for example.

In the calcination step, the temperature for calcining the mixture may be, for example, from 700 to 1000°C, preferably from 700 to 850°C, more preferably from 710 to 850°C. The duration for calcining the mixture can be from 3 to 10 hours, for example. The calcination step can be carried out in an oxidizing atmosphere.

### <Non-Aqueous Electrolyte Secondary Battery>

A secondary battery according to the present disclosure is usable for any purpose of use. For example, the secondary battery is usable as a main electric power supply or a motive force assisting electric power supply in an electric vehicle. A plurality of secondary batteries may be connected together to form a battery module or a battery pack. The secondary battery may be a lithium-ion battery.

The secondary battery according to the present disclosure includes an exterior package, an electrode assembly, and an electrolyte. The electrode assembly may be a wound-type one, or may be a stack-type one. The electrode assembly includes a positive electrode plate, a separator, and a negative electrode plate. The positive electrode plate has a positive electrode active material layer that includes the above-described positive electrode active material particles. That is, the secondary battery according to the present disclosure includes the above-described positive electrode active material particles. Because of this, the secondary battery according to the present disclosure tends to have enhanced output properties and enhanced capacity properties.

### [Examples]

In the following, the present invention will be described in further detail by way of Examples. "%" and "part(s)" in Examples refer to mass% and part(s) by mass, respectively, unless otherwise specified.

### [Method for Evaluating Precursor Particles]

### (Composition Analysis)

The composition of a nickel-containing transition metal composite hydroxide in precursor particles was analyzed with the use of an ICP emission spectrochemical analyzer. In Examples and Comparative Examples, the composition was identified to be Ni_{0.8}Co_{0.1}Mn_{0.1}(OH)₂.

### (Measurement of Average Particle Diameter)

Based on the integrated value of volume measured with a commercially available particle diameter analyzer of laser light diffraction-scattering type, the average particle diameter of the precursor particles in Examples and Comparative Examples was measured.

### (Measurement of Circularity)

With a commercially available particle shape image analyzer, the circularity of the precursor particles in Examples and Comparative Examples was measured.

### (Particle Structure, and Measurement of First Ratio, Second Ratio, and Third Ratio)

By ion milling work, a cross section of a precursor particle was exposed. The cross section was examined with a commercially available scanning electron microscope (SEM), and an SEM image was captured. In the image thus captured, the particle structure of the precursor particle in Examples and Comparative Examples was examined. Also in the SEM image of the cross section, with image analysis software, the region of the gap portion was discriminated from the region where primary particles were present, and then the particle diameter (diameter), the diameter of the core portion, the thickness of the outer portion, and the width of the gap portion were determined, and thereby, from the scale ratio, the first ratio (which was (Diameter of core portion)/(Particle diameter)), the second ratio (which was (Thickness of outer portion)/(Particle diameter)), and the third ratio (which was (Width of gap portion)/(Particle diameter)) were calculated. The description of the particle structure in Table 1 means the following particle structures.

### [Solid+hollow]

The particles have a core portion, a gap portion, and an outer portion.

### [Solid]

The particles have a solid structure. (The particles have neither a gap portion nor an outer portion.)

### [Hollow]

The particles have a hollow structure. (The particles do not have a core portion.)

### [(Solid+hollow)/solid]

Particles having a core portion, a gap portion, and an outer portion and particles having a solid structure are mixed together. (About 50% are particles having a core portion, a gap portion, and an outer portion, and the remaining (about 50%) are particles having a solid structure.)

### [(Solid+hollow)/hollow]

Particles having a core portion, a gap portion, and an outer portion and particles having a hollow structure are mixed together. (About 50% are particles having a core portion, a gap portion, and an outer portion, and the remaining (about 50%) are particles having a hollow structure.)

The ratio of the particles having a core portion, a gap portion, and an outer portion to the particles having a solid structure and the particles having a hollow structure was determined in an SEM image of cross sections of fifty particles.

### [Method for Evaluating Positive Electrode Active Material Particles]

### (Measurement of Average Particle Diameter)

Based on the integrated value of volume measured with a commercially available particle diameter analyzer of laser light diffraction-scattering type, the average particle diameter of the positive electrode active material particles in Examples and Comparative Examples was measured.

### (Measurement of Circularity)

With a commercially available particle shape image analyzer, the circularity of the positive electrode active material particles in Examples and Comparative Examples was measured.

### (Measurement of BET Specific Surface Area)

With a commercially available flow-type gas adsorption specific surface area measurement apparatus, the specific surface area in Examples and Comparative Examples was measured.

### (Measurement of Average Particle Diameter of Primary Particles, Fourth Ratio, and Fifth Ratio)

By ion milling work, a cross section of a precursor was exposed. The cross section was examined with a commercially available scanning electron microscope (SEM), and thereby an SEM image was captured. The average particle diameter of primary particles was calculated by selecting primary particles with the use of image analysis software. Also with the use of image analysis software, in the SEM image of the cross section, the region of the gap portion was discriminated from the region where primary particles were present, and then the particle diameter (diameter), the thickness of the outer portion, and the width of the gap portion were determined, and thereby, from the scale ratio, the fourth ratio (which was (Thickness of outer portion)/(Particle diameter)) and the fifth ratio (which was (Width of gap portion)/(Particle diameter)) were calculated.

### <Example 1>

### [Production of Precursor Particles]

### (Generation of Taylor Vortex Reaction Field)

To a 1-L reaction tank for generating a Taylor vortex reaction field, water was added. The reaction tank was equipped with an outer tube and an inner tube. While the inner tube was being stirred at a rotational speed of 1500 rpm, the temperature of the solution inside the reaction tank was regulated to a temperature of 30°C and then a proper amount of a 30-wt% aqueous sodium hydroxide solution was added thereto to regulate the pH at a reference liquid temperature of 25°C to 12.1, for generating a Taylor vortex reaction field between the outer tube and the inner tube.

### (Preparation of Raw Material Metal Aqueous Solution)

Subsequently, nickel sulfate, cobalt sulfate, and manganese sulfate were dissolved in water in a molar ratio of (nickel sulfate):(cobalt sulfate):(manganese sulfate)=80:10:10, to prepare a 2.0-mol/L raw material metal aqueous solution.

### (Preparation of Aqueous Ammonia Solution)

With the use of a 28-wt% aqueous ammonia solution, a 10-wt% aqueous ammonia solution was prepared.

### (Crystallization Step)

While nitrogen gas was being bubbled into the raw material metal aqueous solution and the aqueous ammonia solution to achieve an oxygen concentration of 0.5 vol% or less in each of them, the raw material metal aqueous solution and the aqueous ammonia solution were supplied in a molar ratio of 1:1 to the Taylor vortex reaction field at proper timings to maintain the pH at a reference liquid temperature of 25°C to remain at 12.1, and under such conditions, crystallization was allowed to start and continue for 18 minutes. In the crystallization step, the oxygen concentration of the Taylor vortex reaction field was checked with a dissolved oxygen analyzer. Also in the crystallization step, the pH of the Taylor vortex reaction field was controlled by regulating the flow rate of the aqueous sodium hydroxide solution with a pH controller.

Then, supply of the raw material metal aqueous solution and the aqueous ammonia solution was halted, and a mixed gas of oxygen and nitrogen was bubbled into the raw material metal aqueous solution and the aqueous ammonia solution to change the oxygen concentration to 15 vol% in each of them; after this, supply of the raw material metal aqueous solution and the aqueous ammonia solution was resumed in a molar ratio between the raw material metal aqueous solution and the aqueous ammonia solution of 1:1 to maintain the pH at a reference liquid temperature of 25°C to remain at 12.1, and the crystallization was allowed to proceed for 12 minutes. Subsequently, the supply of the solutions was halted to end the crystallization. After the crystallization ended, the product was filtrated and then rinsed with water, followed by drying, and thereby precursor particles were obtained. Results are given in Table 1.

### <Example 2>

### [Production of Precursor Particles]

### (Generation of Taylor Vortex Reaction Field)

A Taylor vortex reaction field was generated in the same manner as in Example 1 except that the rotational speed of the inner tube was changed to 2000 rpm and the pH at a reference liquid temperature of 25°C was regulated to 11.5.

### (Preparation of Raw Material Metal Aqueous Solution)

A 2.0-mol/L raw material metal aqueous solution was prepared in the same manner as in Example 1 except that the molar ratio between nickel sulfate, cobalt sulfate, and manganese sulfate of (nickel sulfate):(cobalt sulfate):(manganese sulfate)=80:10:10 in the preparation of the raw material metal aqueous solution in Example 1 was changed to the molar ratio between nickel sulfate, cobalt sulfate, and manganese sulfate of (nickel sulfate):(cobalt sulfate):(manganese sulfate)=60:20:20.

### (Preparation of Aqueous Ammonia Solution)

A 10-wt% aqueous ammonia solution was prepared in the same manner as in Example 1.

### (Crystallization Step)

The crystallization step was carried out in the same manner as in Example 1 except that the pH and the second oxygen concentration in the crystallization step of Example 1 were changed to the pH and the second oxygen concentration specified in Table 1, to obtain precursor particles. Results are given in Table 1.

### <Example 3>

### [Production of Precursor Particles]

### (Generation of Taylor Vortex Reaction Field)

A Taylor vortex reaction field was generated in the same manner as in Example 1 except that the rotational speed of the inner tube was changed to 2000 rpm and the pH at a reference liquid temperature of 25°C was regulated to 11.2.

### (Preparation of Raw Material Metal Aqueous Solution)

A 2.0-mol/L raw material metal aqueous solution was prepared in the same manner as in Example 1 except that instead of dissolving nickel sulfate, cobalt sulfate, and manganese sulfate in water in a molar ratio of (nickel sulfate):(cobalt sulfate):(manganese sulfate)=80:10:10 in the preparation of the raw material metal aqueous solution in Example 1, nickel sulfate, cobalt sulfate, manganese sulfate, and zirconium sulfate were dissolved in water in a molar ratio of (nickel sulfate):(cobalt sulfate):(manganese sulfate):(zirconium sulfate)=69:10:20:1.

### (Preparation of Aqueous Ammonia Solution)

A 10-wt% aqueous ammonia solution was prepared in the same manner as in Example 1.

### (Crystallization Step)

The crystallization step was carried out in the same manner as in Example 1 except that the pH, the first oxygen concentration, the second oxygen concentration, the first crystallization duration, and the second crystallization duration in the crystallization step of Example 1 were changed to the pH, the first oxygen concentration, the second oxygen concentration, the first crystallization duration, and the second crystallization duration specified in Table 1, to obtain precursor particles. Results are given in Table 1.

### <Example 4>

### [Production of Precursor Particles]

### (Generation of Taylor Vortex Reaction Field)

A Taylor vortex reaction field was generated in the same manner as in Example 1 except that the rotational speed of the inner tube was changed to 2000 rpm and the pH at a reference liquid temperature of 25°C was regulated to 12.4.

### (Preparation of Raw Material Metal Aqueous Solution)

A 2.0-mol/L raw material metal aqueous solution was prepared in the same manner as in Example 1 except that the molar ratio between nickel sulfate, cobalt sulfate, and manganese sulfate of (nickel sulfate):(cobalt sulfate):(manganese sulfate)=80:10:10 in the preparation of the raw material metal aqueous solution in Example 1 was changed to the molar ratio between nickel sulfate, cobalt sulfate, and manganese sulfate of (nickel sulfate):(cobalt sulfate):(manganese sulfate)=88:6:6.

### (Preparation of Aqueous Ammonia Solution)

A 10-wt% aqueous ammonia solution was prepared in the same manner as in Example 1.

### (Crystallization Step)

The crystallization step was carried out in the same manner as in Example 1 except that the pH, the first oxygen concentration, the second oxygen concentration, the first crystallization duration, and the second crystallization duration in the crystallization step of Example 1 were changed to the pH, the first oxygen concentration, the second oxygen concentration, the first crystallization duration, and the second crystallization duration specified in Table 1, to obtain precursor particles. Results are given in Table 1.

### <Example 5>

### [Production Method for Precursors]

### (Generation of Taylor Vortex Reaction Field)

A Taylor vortex reaction field was generated in the same manner as in Example 1 except that the rotational speed of the inner tube was changed to 2000 rpm and the pH at a reference liquid temperature of 25°C was regulated to 10.7.

### (Preparation of Raw Material Metal Aqueous Solution)

A 2.0-mol/L raw material metal aqueous solution was prepared in the same manner as in Example 1.

### (Preparation of Aqueous Ammonia Solution)

A 10-wt% aqueous ammonia solution was prepared in the same manner as in Example 1.

### (Crystallization Step)

The crystallization step was carried out in the same manner as in Example 1 except that the pH, the second oxygen concentration, the first crystallization duration, and the second crystallization duration in the crystallization step of Example 1 were changed to the pH, the second oxygen concentration, the first crystallization duration, and the second crystallization duration specified in Table 1, to obtain precursor particles. Results are given in Table 1.

### <Example 6>

### [Production Method for Precursors]

### (Generation of Taylor Vortex Reaction Field)

A Taylor vortex reaction field was generated in the same manner as in Example 1 except that the rotational speed of the inner tube was changed to 2000 rpm.

### (Preparation of Raw Material Metal Aqueous Solution)

A 2.0-mol/L raw material metal aqueous solution was prepared in the same manner as in Example 1.

### (Preparation of Aqueous Ammonia Solution)

A 10-wt% aqueous ammonia solution was prepared in the same manner as in Example 1.

### (Crystallization Step)

The crystallization step was carried out in the same manner as in Example 1 except that the first oxygen concentration, the second oxygen concentration, the first crystallization duration, and the second crystallization duration in the crystallization step of Example 1 were changed to the first oxygen concentration, the second oxygen concentration, the first crystallization duration, and the second crystallization duration specified in Table 1, to obtain precursor particles. Results are given in Table 1.

### <Example 7>

### [Production Method for Precursors]

### (Generation of Taylor Vortex Reaction Field)

A Taylor vortex reaction field was generated in the same manner as in Example 1 except that the rotational speed of the inner tube was changed to 2000 rpm and the pH at a reference liquid temperature of 25°C was regulated to 11.8.

### (Preparation of Raw Material Metal Aqueous Solution)

A 2.0-mol/L raw material metal aqueous solution was prepared in the same manner as in Example 1 except that the molar ratio between nickel sulfate, cobalt sulfate, and manganese sulfate of (nickel sulfate):(cobalt sulfate):(manganese sulfate)=80:10:10 in the preparation of the raw material metal aqueous solution in Example 1 was changed to the molar ratio between nickel sulfate, cobalt sulfate, and manganese sulfate of (nickel sulfate):(cobalt sulfate):(manganese sulfate)=88:6:6.

### (Preparation of Aqueous Ammonia Solution)

A 10-wt% aqueous ammonia solution was prepared in the same manner as in Example 1.

### (Crystallization Step)

The crystallization step was carried out in the same manner as in Example 1 except that the pH, the second oxygen concentration, the first crystallization duration, and the second crystallization duration in the crystallization step of Example 1 were changed to the pH, the second oxygen concentration, the first crystallization duration, and the second crystallization duration specified in Table 1, to obtain precursor particles. Results are given in Table 1.

### <Example 8>

### [Production Method for Precursors]

### (Generation of Taylor Vortex Reaction Field)

A Taylor vortex reaction field was generated in the same manner as in Example 1 except that the rotational speed of the inner tube was changed to 2000 rpm and the pH at a reference liquid temperature of 25°C was regulated to 11.8.

### (Preparation of Raw Material Metal Aqueous Solution)

A 2.0-mol/L raw material metal aqueous solution was prepared in the same manner as in Example 1 except that the molar ratio between nickel sulfate, cobalt sulfate, and manganese sulfate of (nickel sulfate):(cobalt sulfate):(manganese sulfate)=80:10:10 in the preparation of the raw material metal aqueous solution in Example 1 was changed to the molar ratio between nickel sulfate, cobalt sulfate, and manganese sulfate of (nickel sulfate):(cobalt sulfate):(manganese sulfate)=50:20:30.

### (Preparation of Aqueous Ammonia Solution)

A 10-wt% aqueous ammonia solution was prepared in the same manner as in Example 1.

### (Crystallization Step)

The crystallization step was carried out in the same manner as in Example 1 except that the pH, the second oxygen concentration, the first crystallization duration, and the second crystallization duration in the crystallization step of Example 1 were changed to the pH, the second oxygen concentration, the first crystallization duration, and the second crystallization duration specified in Table 1, to obtain precursor particles. Results are given in Table 1.

### <Example 9>

### [Production Method for Precursors]

### (Generation of Taylor Vortex Reaction Field)

A Taylor vortex reaction field was generated in the same manner as in Example 1 except that the rotational speed of the inner tube was changed to 2000 rpm.

### (Preparation of Raw Material Metal Aqueous Solution)

A 2.0-mol/L raw material metal aqueous solution was prepared in the same manner as in Example 1 except that the molar ratio between nickel sulfate, cobalt sulfate, and manganese sulfate of (nickel sulfate):(cobalt sulfate):(manganese sulfate)=80:10:10 in the preparation of the raw material metal aqueous solution in Example 1 was changed to the molar ratio between nickel sulfate, cobalt sulfate, and manganese sulfate of (nickel sulfate):(cobalt sulfate):(manganese sulfate)=88:6:6.

### (Preparation of Aqueous Ammonia Solution)

A 10-wt% aqueous ammonia solution was prepared in the same manner as in Example 1.

### (Crystallization Step)

The crystallization step was carried out in the same manner as in Example 1 except that the second oxygen concentration, the first crystallization duration, and the second crystallization duration in the crystallization step of Example 1 were changed to the second oxygen concentration, the first crystallization duration, and the second crystallization duration specified in Table 1, to obtain precursor particles. Results are given in Table 1.

### <Example 10>

### [Production Method for Precursors]

### (Generation of Taylor Vortex Reaction Field)

A Taylor vortex reaction field was generated in the same manner as in Example 1 except that the rotational speed of the inner tube was changed to 2000 rpm.

### (Preparation of Raw Material Metal Aqueous Solution)

A 2.0-mol/L raw material metal aqueous solution was prepared in the same manner as in Example 1 except that the molar ratio between nickel sulfate, cobalt sulfate, and manganese sulfate of (nickel sulfate):(cobalt sulfate):(manganese sulfate)=80:10:10 in the preparation of the raw material metal aqueous solution in Example 1 was changed to the molar ratio between nickel sulfate, cobalt sulfate, and manganese sulfate of (nickel sulfate):(cobalt sulfate):(manganese sulfate)=88:6:6.

### (Preparation of Aqueous Ammonia Solution)

A 10-wt% aqueous ammonia solution was prepared in the same manner as in Example 1.

### (Crystallization Step)

The crystallization step was carried out in the same manner as in Example 1 except that the second oxygen concentration, the first crystallization duration, and the second crystallization duration in the crystallization step of Example 1 were changed to the second oxygen concentration, the first crystallization duration, and the second crystallization duration specified in Table 1, to obtain precursor particles. Results are given in Table 1.

### <Comparative Example 1>

### [Production of Precursor Particles (in Batches)]

### (Preparation of Reaction Tank)

A 28-wt% aqueous ammonia solution was used to prepare 2 L of an aqueous ammonia solution with an ammonium ion concentration of 11.5 g/L. After the aqueous ammonia solution thus prepared (2 L) was added to a 5-L reaction tank, nitrogen gas was flowed into it to achieve an oxygen concentration of 1.0 vol% or less in the tank, and stirring was carried out at 800 rpm. After the solution inside the reaction tank was adjusted to 40°C, a proper amount of 30-wt% aqueous sodium hydroxide solution was added thereto to regulate the pH at a reference liquid temperature of 25°C to 13.0.

### (Preparation of Raw Material Metal Aqueous Solution)

Subsequently, nickel sulfate, cobalt sulfate, and manganese sulfate were dissolved in water in a molar ratio of 80:10:10, to prepare a 1.5-mol/L raw material metal aqueous solution.

### (Nucleation Step)

While the raw material metal aqueous solution and the aqueous ammonia solution were being supplied in a molar ratio of 1:1 at proper timings to maintain the pH at a reference liquid temperature of 25°C to remain at 13.0, crystallization was allowed to proceed for 60 minutes. The pH was controlled by regulating the flow rate of sodium hydroxide with a pH controller. During this time, the concentration of the aqueous ammonia solution thus supplied was regulated so as to maintain the ammonium ion concentration of the reaction liquid at 11.5 g/L.

### (Nuclei Growth Step)

After the completion of the nucleation step, sulfuric acid was gradually supplied to change the pH of the solution in the reaction tank at a reference liquid temperature of 25°C to 10.7 while a mixed gas of oxygen and nitrogen was being introduced to change the oxygen concentration to 40 vol%, and stirring was carried out for 30 minutes. Then, supply of the raw material metal aqueous solution and the aqueous ammonia solution to the reaction tank was resumed. While the pH at a reference liquid temperature of 25°C was being maintained at 10.7, crystallization was allowed to proceed for 4 hours. Subsequently, nitrogen gas was flown into it to change the oxygen concentration in the tank back to 1.0 vol% or less, and then crystallization was allowed to proceed for 2 hours, followed by halting the supply of the raw material metal aqueous solution and the aqueous ammonia solution to end the crystallization. After the crystallization was ended, the product was filtrated and then rinsed with water, followed by drying, and thereby precursor particles of Comparative Example 1 were obtained. Results are given in Table 1.

### <Comparative Example 2>

### [Production Method for Precursors]

### (Generation of Taylor Vortex Reaction Field)

A Taylor vortex reaction field was generated in the same manner as in Example 1 except that the rotational speed of the inner tube was changed to 2000 rpm and the pH at a reference liquid temperature of 25°C was regulated to 12.8.

### (Preparation of Raw Material Metal Aqueous Solution)

A 2.0-mol/L raw material metal aqueous solution was prepared in the same manner as in Example 1.

### (Preparation of Aqueous Ammonia Solution)

A 10-wt% aqueous ammonia solution was prepared in the same manner as in Example 1.

### (Crystallization Step)

The crystallization step was carried out in the same manner as in Example 1 except that the pH at a reference liquid temperature of 25°C, the second oxygen concentration, the first crystallization duration, and the second crystallization duration in Example 1 were changed to the pH at a reference liquid temperature of 25°C, the second oxygen concentration, the first crystallization duration, and the second crystallization duration specified in Table 1, to obtain precursor particles. Results are given in Table 1.

### <Example 11>

### [Production of Positive Electrode Active Material Particles]

The precursor particles of Example 1 and a lithium compound were mixed together so that the ratio of the total number of moles of lithium to the total number of moles of metallic elements except lithium (hereinafter also called the Li/Me ratio) became 1.10, and then the resultant was calcined for 7 hours in an oxidizing atmosphere at a calcination temperature of 760°C; thereby positive electrode active material particles were obtained. Results are given in Table 2.

### <Examples 12 to 18 and Comparative Examples 3 to 8>

Positive electrode active material particles were obtained in the same manner as in Example 1 except that the precursor particles specified in Table 1 were used and the Li/Me ratio and/or the calcination temperature specified in Table 1 were adopted. Results are given in Table 2.

**[Table 1]**

| | pH | First oxygen conc. | First crystallization duration | First crystallization ratio | Second oxygen cone. | Second crystallization duration | Second crystallization ratio | First ratio | Second ratio | Third ratio | Particle structure | Average particle diameter | Circularity |
|---|---|---|---|---|---|---|---|---|---|---|---|---|---|
| | | (vol%) | (min) | (%) | (vol%) | (min) | (%) | (%) | (%) | (%) | | (µm) | |
| Ex. 1 | 12.1 | 0.5 | 18 | 60 | 15 | 12 | 40 | 1 | 26 | 73 | Solid+hollow | 4.1 | 0.97 |
| Ex. 2 | 11.5 | 0.5 | 18 | 60 | 35 | 12 | 40 | 7 | 29 | 64 | Solid+hollow | 4.2 | 0.93 |
| Ex. 3 | 11.2 | 0.4 | 16 | 53 | 52 | 14 | 47 | 8 | 47 | 45 | Solid+hollow | 3.6 | 0.91 |
| Ex. 4 | 12.4 | 0.9 | 30 | 75 | 20 | 10 | 25 | 13 | 32 | 55 | Solid+hollow | 6.9 | 0.93 |
| Ex. 5 | 10.7 | 0.5 | 21 | 70 | 20 | 9 | 30 | 55 | 10 | 35 | Solid+hollow | 3.3 | 0.74 |
| Ex. 6 | 12.1 | 3.5 | 32 | 64 | 18 | 18 | 36 | 28 | 8 | 64 | (Solid+hollow) /hollow | 4.1 | 0.92 |
| Ex. 7 | 11.8 | 0.5 | 12 | 40 | 20 | 18 | 60 | 20 | 37 | 43 | (Solid+hollow) /hollow | 3.4 | 0.92 |
| Ex. 8 | 11.8 | 0.5 | 27 | 90 | 20 | 3 | 10 | 2 | 6 | 92 | (Solid+hollow) /solid | 4.9 | 0.96 |
| Ex. 9 | 12.1 | 0.5 | 21 | 70 | 5 | 9 | 30 | 10 | 3 | 87 | (Solid+hollow) /solid | 4.3 | 0.92 |
| Ex. 10 | 12.1 | 0.5 | 21 | 70 | 65 | 9 | 30 | 8 | 44 | 48 | Solid+hollow | 3.3 | 0.82 |
| Comp. Ex. 1 | - | - | - | - | - | - | - | - | - | - | Solid+hollow | 4.1 | 0.82 |
| Comp. Ex. 2 | 12.8 | 0.5 | 21 | 70 | 20 | 9 | 30 | 100 | 0 | 0 | Solid | 5.3 | 0.84 |

**[Table 2]**

| | Precursor particles | Li/Me ratio | Calcination temp. | Average particle diameter | BET specific surface area | Primary particle diameter | Circularity | Fourth ratio | Fifth ratio |
|---|---|---|---|---|---|---|---|---|---|
| | Type | | (°C) | (µm) | (m²/g) | (µm) | | (%) | (%) |
| Ex. 11 | Ex. 1 | 1.10 | 760 | 5.1 | 1.2 | 0.7 | 0.96 | 30 | 47 |
| Ex. 12 | Ex. 2 | 1.03 | 740 | 6.4 | 1.8 | 0.7 | 0.94 | 16 | 53 |
| Ex. 13 | Ex. 3 | 1.10 | 810 | 4.3 | 2.4 | 0.5 | 0.93 | 22 | 62 |
| Ex. 14 | Ex. 4 | 1.18 | 760 | 8.2 | 0.7 | 0.4 | 0.95 | 28 | 44 |
| Comp. Ex. 3 | Ex. 5 | 1.10 | 810 | 5.4 | 3.3 | 0.8 | 0.75 | 18 | 40 |
| Ex. 15 | Ex. 6 | 1.10 | 760 | 4.7 | 2.7 | 0.8 | 0.93 | 23 | 77 |
| Ex. 16 | Ex. 7 | 1.03 | 740 | 4.3 | 2.6 | 0.7 | 0.91 | 43 | 52 |
| Ex. 17 | Ex. 8 | 1.03 | 740 | 6.7 | 0.8 | 0.1 | 0.95 | 8 | 20 |
| Ex. 18 | Ex. 9 | 1.08 | 760 | 5.7 | 0.9 | 0.4 | 0.92 | 17 | 8 |
| Comp. Ex. 4 | Ex. 10 | 1.08 | 760 | 4.6 | 0.8 | 0.6 | 0.84 | 18 | 65 |
| Comp. Ex. 5 | Ex. 1 | 1.10 | 700 | 5.8 | 5.7 | 0.05 | 0.91 | 32 | 42 |
| Comp. Ex. 6 | Ex. 1 | 1.10 | 890 | 5.6 | 0.4 | 2.2 | 0.85 | 100 | 0 |
| Comp. Ex. 7 | Comp. Ex. 1 | 1.10 | 760 | 5.1 | 0.8 | 0.5 | 0.83 | 20 | 50 |
| Comp. Ex. 8 | Comp. Ex. 2 | 1.10 | 760 | 8.4 | 0.4 | 1.2 | 0.82 | 100 | 0 |

In Examples 1 to 10, particles having a core portion, a gap portion, and an outer portion were successfully prepared with no change of pH in the crystallization step and less changes of atmosphere in the crystallization step as compared to Comparative Example 1. In Comparative Example 2, the pH at a reference liquid temperature of 25°C exceeded 12.5, and as a result, particles having a core portion, a gap portion, and an outer portion were not obtained.

The positive electrode active material particles of Examples 13 to 20 have a circularity of 0.90 or more, so it is understood that they have excellent packing properties. The positive electrode active material particles of Comparative Examples 4 and 7 have low circularity, so it is understood that their packing properties are insufficient. In Comparative Example 5, the calcination temperature was not high enough, so unreacted precursor particles remained. In Comparative Example 6, since the calcination temperature was too high, the primary particles grew excessively and gap portions disappeared, so the resulting particles had a solid structure. In Comparative Example 8, the particles had a solid structure and a low circularity.

Although the embodiments of the present invention have been described, the embodiments disclosed herein are illustrative and non-restrictive in any respect. The scope of the present invention is defined by the terms of the claims, and is intended to encompass any modifications within the meaning and the scope equivalent to the terms of the claims.

## Claims

1. A method of producing particles, wherein
the particles include first particles (20) each having a core portion (21), a gap portion (22) outside the core portion (21), and an outer portion (23) outside the gap portion (22) and each made of a nickel-containing transition metal composite hydroxide,
the method comprises a crystallization step that involves generating a Taylor vortex reaction field, and adding an aqueous solution containing a transition-metal-containing compound, an ammonium supplier, and an aqueous alkaline solution to the Taylor vortex reaction field to allow crystallization of a nickel-containing transition metal composite hydroxide to proceed, and
in the crystallization step,
a pH of the Taylor vortex reaction field at a liquid temperature of 25°C is 12.5 or less,
a first crystallization is performed in which the crystallization is allowed to proceed at an oxygen concentration of the Taylor vortex reaction field of 3.5 vol% or less,
subsequently a second crystallization is performed in which the oxygen concentration of the Taylor vortex reaction field is changed to a range of 5 vol% to 65 vol% and the crystallization is allowed to proceed, and
a duration of the first crystallization is from 40% to 90% of a total crystallization duration.

2. The method of producing particles according to claim 1, wherein in the crystallization step, the pH of the Taylor vortex reaction field at a liquid temperature of 25°C is 11.0 or more.

3. The method of producing particles according to claim 1 or 2, wherein during the first crystallization, the crystallization is allowed to proceed with the oxygen concentration of the Taylor vortex reaction field maintained at 3.0 vol% or less.

4. The method of producing particles according to any one of claims 1 to 3, wherein the duration of the first crystallization is from 50% to 80% of the total crystallization duration.

5. The method of producing particles according to any one of claims 1 to 4, wherein during the second crystallization, the crystallization is allowed to proceed with the oxygen concentration of the Taylor vortex reaction field maintained at 10 vol% to 60 vol%.

6. The method of producing particles according to any one of claims 1 to 5, wherein a rotational speed of an inner tube in which the Taylor vortex reaction field is generated is from 500 to 2000 rpm.

7. Particles (20) each having a core portion (21), a gap portion (22) outside the core portion (21), and an outer portion (23) outside the gap portion (22) and each made of a nickel-containing transition metal composite hydroxide, wherein
each of the particles has a circularity of 0.90 or more.

8. The particles according to claim 7, wherein an average particle diameter is from 1 µm to 10 µm.

9. The particles according to claim 7 or 8, wherein an average ratio (%) of a diameter of the core portion (21) to a particle diameter is from 1% to 70%.

10. The particles according to any one of claims 7 to 9, wherein an average ratio (%) of a thickness of the outer portion (23) to a particle diameter is from 3% to 50%.

11. The particles according to any one of claims 7 to 10, wherein an average ratio (%) of a width of the gap portion (22) to a particle diameter is 10% or more.

12. Positive electrode active material particles (30) each having a core portion (31), a gap portion (32) outside the core portion (31), and an outer portion (33) outside the gap portion (32) and each made of a metal composite oxide containing lithium and nickel, wherein
each of the positive electrode active material particles has a circularity of 0.90 or more.

13. The positive electrode active material particles according to claim 12, wherein the core portion (31) has a solid structure or a hollow structure.

14. The positive electrode active material particles according to claim 12 or 13, each further having one or more inner layers between the outer portion (33) and the core portion (31).

15. The positive electrode active material particles according to any one of claims 12 to 14, wherein an average particle diameter is from 2 µm to 10 µm.

16. The positive electrode active material particles according to any one of claims 12 to 15, wherein an average ratio (%) of a thickness of the outer portion (33) to a particle diameter is from 5% to 50%.

17. The positive electrode active material particles according to any one of claims 12 to 16, wherein an average ratio (%) of a width of the gap portion (32) to a particle diameter is from 5% to 80%.

18. The positive electrode active material particles according to any one of claims 12 to 17, wherein a BET specific surface area is from 0.5 to 2.8 m²/g.

19. The positive electrode active material particles according to any one of claims 12 to 18, wherein
each of the positive electrode active material particles is a secondary particle consisting of primary particles (34, 35), and
an average particle diameter of the primary particles is from 0.1 to 1.0 µm.

20. A method of producing positive electrode active material particles, the method comprising:
a particle production step to produce particles by the method of producing particles according to any one of claims 1 to 6;
a mixing step to mix the particles thus obtained and lithium together to obtain a mixture; and
a calcination step to calcine the mixture.

21. A non-aqueous electrolyte secondary battery comprising the positive electrode active material particles according to any one of claims 12 to 19.
